(19) Europäisches Patentamt
European Patent Office
Office européen des brevets

(11) **EP 4 715 582 A1**

(12) **EUROPEAN PATENT APPLICATION**

(43) Date of publication:
**25.03.2026 Bulletin 2026/13**

(21) Application number: **25200993.1**

(22) Date of filing: **09.09.2025**

(51) International Patent Classification (IPC):
*G06F 9/38* (2018.01)    *G06F 9/30* (2018.01)

(52) Cooperative Patent Classification (CPC):
**G06F 9/3851; G06F 9/30123**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.09.2024 US 202463696797 P**
**15.07.2025 US 202519270462**

(71) Applicant: **Samsung Electronics Co., Ltd.**
**Suwon-si, Gyeonggi-do 16677 (KR)**

(72) Inventors:
• **ZHANG, Tong**
**San Jose, CA, 95134 (US)**
• **ZENG, Jianping**
**San Jose, CA, 95134 (US)**
• **ZHANG, Da**
**San Jose, CA, 95134 (US)**
• **PITCHUMANI, Rekha**
**San Jose, CA, 95134 (US)**
• **KI, Yang Seok**
**San Jose, CA, 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **REGISTER RENAMING BASED ON THREAD OFFSET IN MULTI-THREADED PROCESSING SYSTEMS**

(57) A technique for register renaming is disclosed. An offset retriever (520) is configured to obtain a first offset and a second offset according to a first register usage and a second register usage, respectively, based on a thread identifier that identifies at least one of a first thread or a second thread, respectively. The first and second threads execute on a processing element, PE, (170). An address pointer (530) is configured to generate at least one of a first register address or a second register address based on at least one of the first offset or the second offset, respectively. The first and second register addresses correspond to first and second operands, respectively, stored in the register file (270). The first and second threads include first and second decoded instructions, respectively, that operate on the first and second operands, respectively.

*FIG. 5*

Description

## TECHNICAL FIELD

The disclosure generally relates to computer architecture. More particularly, the subject matter disclosed herein relates to register renaming based on thread offset in a multithreaded processing system.

## BACKGROUND

The present background section is intended to provide context only, and the disclosure of any concept in this section does not constitute an admission that said concept is prior art.

Advances in data science, artificial intelligence (AI), and machine learning (ML) have led to transformative changes in technologies across various industries. To accommodate these changes, semiconductor devices and systems have also been developed with new technologies including computing architecture, processor and memory designs, network security, and communication interfaces. Among these developments, processor architectures have become more and more significant, especially in applications that require high throughput, low power and small physical spaces such as mobile devices.

Among the advanced processor architecture designs, instruction pipeline structure has become popular for many processing applications including multi-threads and parallel operations. As the demands for high performance computing increase, designs of efficient processor architecture have increasingly faced many challenges. Issues such as architectural register dependencies, out-of-order and in-order executions, circuit complexities, inefficient compiler technologies, and complexities in communication and interfaces in multiprocessor environments have created numerous problems in instruction pipeline designs. The problems are even more prevalent in multi-threaded processing systems. Compilers tend to generate inefficient code in resolving register conflicts and do not exploit the internal structure of the microarchitecture. Hardware solutions tend to be overly complicated, leading to large silicon areas and are not suitable for high-performance computing.

## SUMMARY

To overcome these issues, systems and methods are described herein for a technique of register renaming in a microarchitecture. The technique aims at providing an efficient structure for resolving conflicts in register usage. The technique includes a hardware implementation of a circuit to rename registers at runtime when the instructions flow through an instruction pipeline in a processing element (PE).

In an embodiment, a register renaming circuit includes an offset retriever and an address pointer. The offset retriever is configured to obtain a first offset and a second offset according to a first register usage and a second register usage, respectively, based on a thread identifier that identifies at least one of a first thread or a second thread, respectively. The first and second threads execute on a processing element (PE). An address pointer is configured to generate at least one of a first register address or a second register address based on at least one of the first offset or the second offset, respectively. The first and second register addresses correspond to first and second operands, respectively, stored in the register file. The first and second threads include first and second decoded instructions, respectively, that operate on the first and second operands, respectively.

## BRIEF DESCRIPTION OF THE DRAWINGS

In the following section, the aspects of the subject matter disclosed herein will be described with reference to exemplary embodiments illustrated in the figures, in which:

FIG. 1 is a block diagram illustrating a system according to an embodiment.
FIG. 2 is a diagram illustrating an executing circuit in a PE according to an embodiment.
FIG. 3 is a diagram illustrating a multi-threaded program according to an embodiment.
FIG. 4 is a diagram illustrating a concurrent execution of a multi-threaded program according to an embodiment.
FIG. 5 is a diagram illustrating a register renaming circuit according to an embodiment.
FIG. 6 is a flowchart illustrating a process of register renaming using offset according to an embodiment.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, the term "solid-state" in the context of storage refers to a storage technology that uses integrated circuits, instead of moving parts (e.g., spinning disks, platters, read/write heads) to store data. The term "flash memory" refers to a type of non-volatile memory which retains data even when power is removed. It is commonly used in solid-state drives (SSDs). There are two types of flash memory: NAND flash and NOR flash. The NAND flash memory has high storage density and lower cost per bit and is suitable for SSDs, mobile applications. The NOR flash is optimized for random access and is often used in applications requiring fast code execution.

As used herein, the term "buffer" in the context of storage refers to a memory device that store data or information on a temporary basis as part of an operation that involves moving data from one location to another. A buffer is typically implemented by static random-access memory (RAM) for fast access. A buffer may be organized as a standard SRAM or a first-in-first-out (FIFO) organization.

In an embodiment, a technique for register renaming is disclosed. The technique provides an efficient in processing an instruction pipeline in a microarchitecture of a multi-threaded processing element (PE) in a system using multiple PEs. The technique offers several advantages including fast resolution of register conflicts, simple design, and efficient register usage of the register file.

In an embodiment, a compiler compiles the multi-threaded program and provides the thread identifiers and the decoded instructions. A register renaming circuit includes a table, an offset retriever, and an address pointer. Based on the number of threads to be executed and the size of the register file, the table is created having the offsets for the threads. The decoded instructions provide register usages which include references to the registers. The offset retriever is configured to obtain a first offset and a second offset according to a first register usage and a second register usage, respectively, based on a thread identifier that identifies at least one of a first thread or a second thread, respectively. The first and second threads execute on a processing element (PE). An address pointer is configured to generate at least one of a first register address or a second register address based on at least one of the first offset or the second offset, respectively. The first and second register addresses correspond to first and second operands, respectively, stored in the register file. The first and second threads include first and second decoded instructions, respectively, that operate on the first and second operands, respectively.

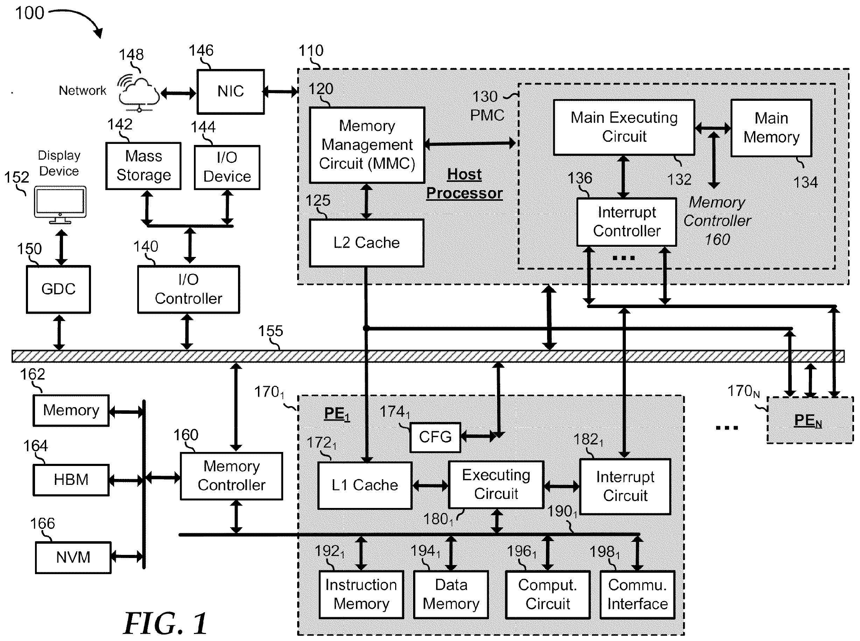

FIG. 1 is a block diagram illustrating a system 100 according to an embodiment. The system 100 may be implemented as one or more system-on-a-chip (SoC) packages including high-density devices such as three-dimensional (3D) packages. The system 100 includes a host processor 110, an input/output (I/O) controller 140, a network interface card (NIC) 146, a graphic display controller (GDC) 150, a bus 155, a memory controller 160, and multiple processing elements $170_k$ (k=1, ..., N). These components may interface or include other components which are described further in the following. The system 100 may include more or less than the above components. In addition, a component may be integrated into another component. For example, the I/O controller 140, the GDC 150, and the memory controller 160 may be integrated in a module. The integration may be partial and/or overlapped. For example, the GDC 150 may be integrated into the processor 110, the I/O controller 140 and the memory controller 160 may be integrated into one single controller, etc. The system 100 may be an example that illustrates the role of high bandwidth memory (HBM) circuits in high computing (HC) platforms. Many HC platforms may use several HBM circuits, including stacked dynamic random-access memories (DRAMs) operating in conjunction with processing units or I/O circuits. In many cases, the environment of the applications adds additional criteria including low power consumption, reliable signal integrity, fault-tolerance, and reliable operations in extreme conditions including heat and tight space. Examples of other applications that would benefit from a highly integrated HBM design include mobile communication (e.g., smart phones, base stations, user equipment), cameras, vehicles, entertainment (e.g., games, multimedia, music, movies), technical designs (e.g., animation, graphics), medical (e.g., visualization, medical imaging), robotics, drones, automatic test equipment, audio processing, speech synthesizer, video and image analysis, vision, automatic face recognition, artificial intelligence (AI) applications, and data centers.

The host processor 110 is a programmable device that may execute a program or a collection of instructions to carry out a task. It may be a general-purpose processor, a digital signal processor, a microcontroller, a neural processing unit (NPU), or a specially designed processor such as a Field Programmable Gate Array (FPGA) or Applications Specific Integrated Circuit (ASIC). It may include a single core or multiple cores. Each core may have multi-way multi-threading. The processor 110 may have simultaneous multithreading features to further exploit the parallelism due to multiple threads across the multiple cores. The host processor 110 may include a memory management circuit (MMC) 120 and a processing management circuit (PMC) 130. The host processor 110 may include more or less than the above components. The bus 155 may be any suitable bus connecting the processor 110 to other devices, including the multiple PEs $170_k$ (k=1, ...N). The bus 155 may be a Direct Media Interface (DMI).

The I/O controller 140 controls a mass storage 142 and input/output devices 144. The mass storage 142 may include CD-ROM, hard disk, and Solid-State Drives (SSDs). Input devices may include stylus, keyboard, mouse, microphone, and image sensor. Output devices may include audio devices, speaker, scanner, and printer. The network interface card (NIC) 146 provides an interface to a network, e.g., via a wireless medium 148.

The memory controller 160 may be an extension of the MMC 120. It controls memory devices such as a memory 162, an HBM 164, and a non-volatile memory (NVM) 166. The memory 162 may include static random-access memory (SRAM) and dynamic random-access memory (DRAM). The HBM 164 may include a 3-D stack of memory dies to offer high bandwidth, low latency, low power consumption, and high storage capacity. It may also have processing-in-memory (PIM) capability. The NVM 166 may include read-only memory (ROM), flash memory, wide-IO NAND, MRAM, and/or other types of memory. The memory 162 may store instructions or programs, loaded from the NVM 166 or the mass storage device 142, that, when executed by the processor 110 or any one of the PE's $170_k$, cause the processor 110 or any one of the PE's $170_k$ to perform operations as described in various embodiments. It may also store data used in the operations. The NVM 166 may include instructions, programs, constants, or data that are maintained whether it is powered or not. The instructions or programs may correspond to the functionalities described in the following. In one embodiment, the programs may include a compiler that compiles a program to be executed in one of the PEs $170_k$. This compiler may be executed by the host processor 100 or any one of the processors connected to the bus 155.

The GDC 150 controls a display device 152 and provides graphical operations. It may be integrated inside the processor 110. It typically has a graphical user interface (GUI) to allow interactions with a user who may send a command or activate a function.

Additional devices or bus interfaces may be available for interconnections and/or expansion. Some examples may include the Peripheral Component Interconnect Express (PCIe) bus, the Universal Serial Bus (USB), etc.

The host processor 110 and multiple processing elements $170_k$ maintain a tight communication interface via at least the bus 155 and other separate lines. The cluster of multiple PEs $170_k$ operate under the control and management of the host processor 110. Once enabled and started, each of the PEs 170 may execute its own programs and access data in its private instruction memory 192 and data memory 194. The host processor 110 may provide a layer of abstraction for the overall architecture. In essence, it may hide the complexity of the program execution from the user or the high-level application. The application program may specify what needs to be done and the host processor 120 will take care of the details of how to carry out by allocating or assignment of the tasks to the individual PEs.

The host processor 110 includes a memory management circuit (MMC) 120 and a processing management circuit (PMC) 130. Each of the PEs $170_k$ (k=1, ..., N) includes an L1 cache $172_k$, a configuration (CFG) circuit $174_k$, an executing circuit $180_k$, an interrupt circuit $182_k$, an instruction memory $192_k$, a data memory $194_k$, a computational circuit $196_k$, and a communication interface $198_k$. The host processor 110 and the PE $170_k$ may include more or less than the above components. In the following, for clarity, the index k for the PE $170_k$ and its associated elements may be dropped.

The MMC 120 is configured to operate with or without the memory controller 160 to manage a memory operation on at least one of the L2 cache 125, the main memory 134, the L1 cache 172 in the PE 170, the memory 162, the HBM 164, or the NVM 166 based on a memory access by at least one of the PMC 130 and at least one of the PEs 170. The memory operation may include at least one of a read access, a write access, a page table update, a translation lookaside buffer (TLB) update, a cache response, and an access violation response. The L2 cache 125 may be configured to function as a translation lookaside buffer (TLB) to translate a virtual memory to physical memory. The L2 cache 125 is typically implemented by a fast memory such as fast SRAM to allow the MMC 120 to quickly retrieve the virtual-to-physical page mappings without accessing the slower page table. It may also be used as a cache storage to provide fast response to memory accesses. The MMC 120 may update the page table in the memory 162 or the TLB in the L2 cache 125 when there are new entries in the table. The MMC 120 may respond to any access violations such as non-existent memory addresses, buffer overflow, null pointer, etc. It may report any violations to a test controller (not shown) for debugging or testing purposes.

The PMC 130 includes a main executing circuit 132, a main memory 134, and an interrupt controller 136. It is configured to manage at least one processor operation performed by at least one of the PEs 170. The processor operation may include at least one of a program launch, a program execution, and an interrupt delivery. The main executing circuit 132 may be a processing unit or circuit that can execute a program or instructions stored in the main memory 134. The program may be any suitable program. In one embodiment, the program is a compiler that compiles a program for execution in the PEs 170. The main memory 134 is private to the PMC 130. It may be any suitable type of memory such as DRAM, SRAM, Magnetoresistive Random-Access Memory (MRAM), Flash, or any combination of them. The main memory 134 may include a page table to translate the virtual pages into physical pages as part of the memory management tasks done by the MMC 120. The main executing circuit 132 may also have access to the memory 162, the HBM 164, and the NVM 166 via the memory controller 160. The interrupt controller 136 controls and manages the interrupt requests and interrupt services from/to the PEs 170. This may include prioritizing the interrupt requests and transmit commands or messages to the PEs 170.

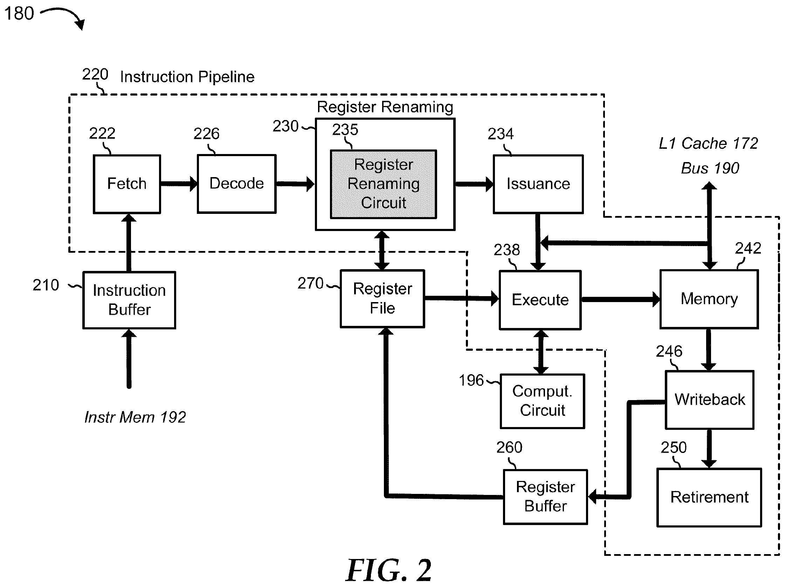

Each of the PEs 170 is configured to operate independently or in concert with other PEs 170 and the host processor 110. Together, they form a multiprocessor system that may cooperate to work in parallel or sequentially based on an overall system objective. In each of the PEs 170, the executing circuit 180 is configured to be a circuit that can execute a program, instructions, or commands stored in the instruction memory 192. The executing circuit 180 is interfaced to, or communicates with, the instruction memory 192, the data memory 194, the computational circuit 196, the communication interface 198, , and the memory controller 160 via a bus 190. Through the memory controller 160, the executing circuit 180 access the memory 162, the HBM 164, and the NVM 166. In some embodiments, the executing circuit 180 includes an instruction pipeline that processes the instructions from the instruction memory 192. The instruction pipeline in the executing circuit 180 will be described in FIG. 2. The executing circuit 180 may access data stored in data memory 194. The data memory 194 may be used to store temporary data and data structures such as stack or heap for program execution. The instruction and data memories 192 and 194 are private or local to the associated PE and may be implemented by any suitable memories including DRAM, SRAM, MRAM, Flash, or any combination of them. The computational circuit 196 is configured to perform logic and/or computational operations. It may include multiple functional units, tensor units, mathematical units, and a buffer and interconnect. These computational units may be scheduled by a PE scheduler (not shown). The PE scheduler may be configured by the host processor 110. The communication interface 198 provides interface for communication between the PEs and between the associated PE with the host processor 110. The L1 cache 172 provides fast cache memory to the executing circuit 180. It may be used to implement the TLB for address translation. It may be connected to the L2 cache 125 in the host processor 110 for additional cache operations. By allowing the L1 cache 172 in each PE to communicate with the L2 cache 125, the PEs may share information among themselves. The interrupt circuit 182 provides services for interrupt requests and responses among the PEs for inter-processor interrupts (IPI) and between the PEs and the host processor 110. It generates an IPI to another PE and receives an IPI response from another PE. The PEs may preload data or status in the memory 162 prior to requesting an interrupt so that the other PE may retrieve the data when servicing the interrupt. It may also generate an interrupt to the main executing circuit 132 through the interrupt controller 136 when the PE requests a service or reports a status. For example, the PE may send an interrupt to the main executing circuit 132 when it completes a currently assigned task. Prior to sending the interrupt, it may transmit messages, results, data, status, or condition to the memory 162 or the HBM 164 to allow the main executing circuit 132 to check the messages when it responds to the interrupt. This allows an efficient communication protocol between the PEs and the host processor 110. The CFG circuit 174 includes CFG data that configures the PE 170 to perform operations or calculations as necessary. The CFG circuit 174 may also enable or disable the PE under the control of the host processor 110.

FIG. 2 is a diagram illustrating the executing circuit 180 shown in FIG. 1 in the PE 170 according to an embodiment. The executing circuit 180 includes an instruction buffer 210, an instruction pipeline 220, a register buffer 260, and a register file 270. The executing circuit 180 may include more or less than the above components.

The instruction buffer 210 stores instructions from the instruction memory 192 and queues them to feed into the instruction pipelines 220. It may include small buffers inserted between stages in the pipeline 220 to keep the instruction flow moving. It may buffer in-order instructions, out-of-order instructions, or predicted branch instructions by corresponding circuits (not shown).

The instruction pipeline 220 includes a number of stages to prepare the instructions for execution in a program flow. The stages in the instruction pipeline 220 includes a fetch stage 222, a decode stage 226, a register renaming stage 230, an issuance stage 234, an execute stage 238, a memory stage 242, a writeback stage 246, and a retirement stage 250. The pipeline 220 may include more or less than the above stages. In addition, not all stages are active for all instructions.

The fetch stage 222 retrieves the instructions from the instruction buffer 210 or directly from the instruction memory 192. A program counter (not shown) keeps track of the address of the instructions. The fetched instructions are typically held in an instruction register ready to be decoded. The fetch stage may include branch prediction, out-of-order execution, reorder buffer, mis-predicted branch handling, and other instruction fetch mechanisms to provide smooth flow of instructions through the pipeline.

The decode stage 226 involves decoding, interpreting, and translating the binary representation of the instructions into parts that can be understood and executed. This includes separating the instructions into opcode and operands and determining what actions to be performed. The result of the decode stage 226 includes decoded instructions which will be further examined to determine there is a conflict in register usage during the execution of the instructions. The decode stage 226 may including branching to a microcode that correspond to an instruction.

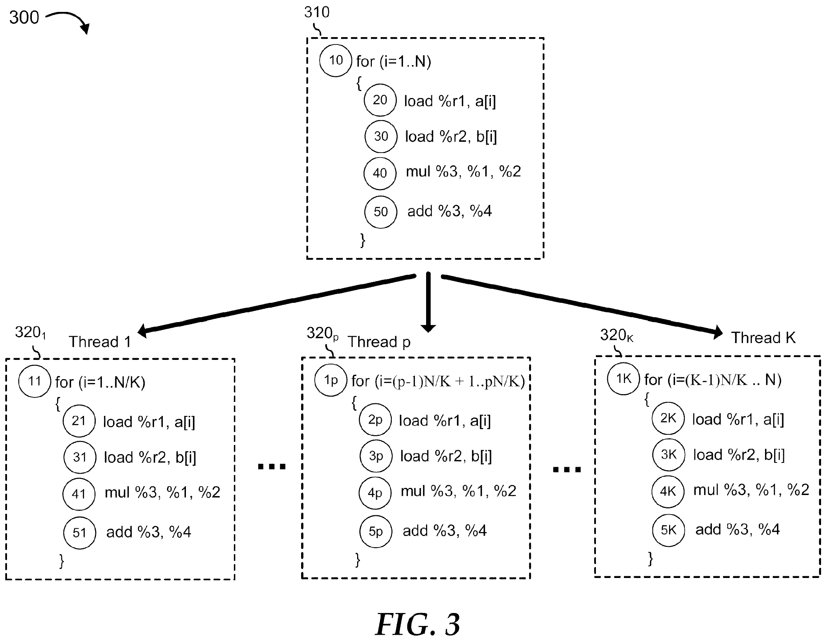

The register renaming stage 230 resolves register conflict usage in the decoded instructions. It removes false data dependencies, especially write-after-write (WAW) and write-after-read (WAR) hazards. The register renaming stage 230 maps the logical or architectural register names to physical register names in the processor internal register file. This process is dynamically updated as the instructions flow through the pipeline so that no conflicts can occur, and the operands can be correctly read and written. The register renaming stage 230 includes a register renaming circuit 235 that will be further described in FIG.3.

The issuance, or issue, stage 234 prepares the instructions for execution. It may include selecting and scheduling the instructions, taking into account factors such as program order and dependency analysis. The issuance stage 234 may include allocating resources (e.g., functional units, memory accesses) and retrieving operands. The issuance may include in-order and out-of-order schemes.

The execution stage 238 executes the instructions as issued and prepared by the issuance stage 234. It uses the computational circuit 196 (in FIG. 1) to perform the execution which may include arithmetic and logic operations provided by the functional unit and other operations. It may retrieve operands from the register file 270, calculate memory addresses, and evaluate branch predictions. It may obtain operands from the memory stage 242 which accesses the L1 cache 172 and the bus 190.

The memory stage 242 obtains operands from memory or writes data to memory. Examples of instructions that may access memory include load and store. The memory stage 242 may be bypassed if the instruction does not access the memory.

The writeback stage 246 writes the results of the execution stage 238 back to the register file 270. It writes the data into a register buffer 260 which transmits the data to the register file 270 when ready. Depending on the instruction, the writeback stage 246 may obtain the data to be written back directly from the computational circuit 196 or from the memory stage 242.

The retirement stage 250 finalizes the instruction's execution. It may be merged with the writeback stage 246. It may include handling exceptions, releasing resources, and other housekeeping functions.

FIG. 3 is a diagram illustrating a multi-threaded program 300 according to an embodiment. The multi-threaded program 300 includes a main program 310 and K threads 320j (j=1, .., K).

The main program 310 is a loop that iterates the body for N times. Each iteration includes the following operations where %r refers to architectural or logical register.

    20: load %r1, a[i] meaning r1 ←a[i]
    30: load %r2, b[i] meaning r2 ←b[i]
    40: mult, %3, %r1; %2 meaning r3 ←r1 x r2
    50: add %3, %4 meaning r3 ←r3 + r4.

As seen from the above, each iteration is independent of other iterations. Furthermore, within each iteration, there are no dependencies among the elements. All N iterations are independent of one another. In other words, an iteration j does not require the result in any other iteration k where $j \neq k$. Since there are no dependencies, these iterations can be done in parallel. In a true parallel environment, they can be assigned to multiple physical processors and they can be performed in parallel. In a multi-threaded programming environment, this means that the program 310 may be decomposed into several threads. Suppose there are K threads. The main program 310 may be divided into N/K threads. The N/K threads will be allowed to execute concurrently. Each thread will perform N/K iterations with different values for the index.

Program $320_1$ will be assigned to thread 1 which will execute the loop from i = 1 to N/K. Program $320_p$ will be assigned to thread p which will execute the loop from i = (p-1)N/K + 1 to pN/K. Program $320_K$ will be assigned to thread K which will execute from i= (K-1)N/K to N. Although they are independent, each iteration involves accessing registers r1, r2, r3, and r4. If the iterations are executed sequentially in one thread, there will be no register conflict. However, if they are executed concurrently, there will be register conflicts and therefore register renaming is used to resolve this conflict.

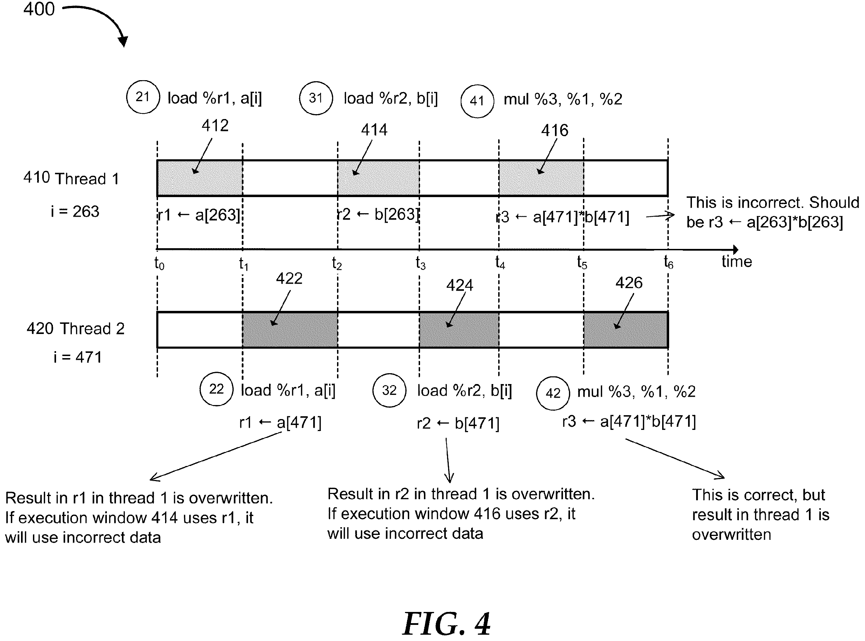

FIG. 4 is a diagram illustrating a concurrent execution 400 of a multi-thread coded program according to an embodiment. The concurrent execution 400 executes two threads 410 and 420 concurrently.

Concurrent execution of threads in a single processor element means that the processor switch execution resources including memory, registers, computational units between threads. Concurrent execution gives the appearance of parallel execution but in reality at any time, only one thread is running. The thread switching may take place very fast and therefore concurrent execution appears parallel.

The two threads 410 and 420 execute on the time axis. Thread 1 410 has the following instructions:

    21: load %r1, a[i]; r1 ← a[i]
    31: load %r2, b[i]: r2 ← b[i]
    41: mult, %3, %1, %2: r3 ← r1 x r2

The index i for thread 1 at the time of execution is i = 263. The instructions 21, 31, and 41 are executed at the execution windows 412, 414, and 416, respectively. For simplicity, assume each of these execution windows completes the execution of the instruction.

Thread 2 420 has the following instructions:

    22: load %r1, a[i]; r1 ← a[i]
    32: load %r2, b[i]: r2 ← b[i]
    42: mult, %3, %1, %2: r3 ← r1 x r2

The index i for thread 2 at the time of execution is i =471. The instructions 22, 32, and 42 are executed at the execution windows 422, 424, and 428, respectively. For simplicity, assume each of these execution windows completes the execution of the instruction.

For concurrent execution, only one execution is active at any given time. From $t_0$ to $t_1$, execution window 412 is active. The register r1 is loaded with the content of a[263]. From $t_1$ to $t_2$, execution window 422 is active. The register r1 is loaded with the content of a[471]. Therefore, the previous content of a[263] in r1 is written over and is destroyed. From $t_2$ to

$t_3$, execution window 414 is active. The register r2 is loaded with the content of b[263]. From $t_3$ to $t_4$, execution window 424 is active. The register r2 is loaded with the content of b[471]. Therefore, the previous content of b[263] in r2 is written over and is destroyed.

From $t_4$ to $t_5$, execution window 416 is active. The register r3 is loaded with the product of r1 and r2 which now contain a[471] and b[471]. The register r3 is therefore loaded with a[471]*b[471]. This is incorrect because it should be the product a[263] and b[263]. From $t_5$ to $t_6$, execution window 426 is active. The register r3 is loaded with the product of r1 and r2 which now contain a[471] and b[471]. The register r3 is therefore loaded with a[471]*b[471]. This turns out to be correct, but if the subsequent instruction in Thread 1 uses the result of the product a[263]*b[263], it will obtain the incorrect result.

The above example illustrates that concurrent execution of multiple threads accessing the same registers will lead to erratic, incorrect, or unpredictable results. One solution to this problem is to allow a thread to access its own register file. In other words, the physical register file is partitioned statically and the partitions are allocated to the multiple threads.

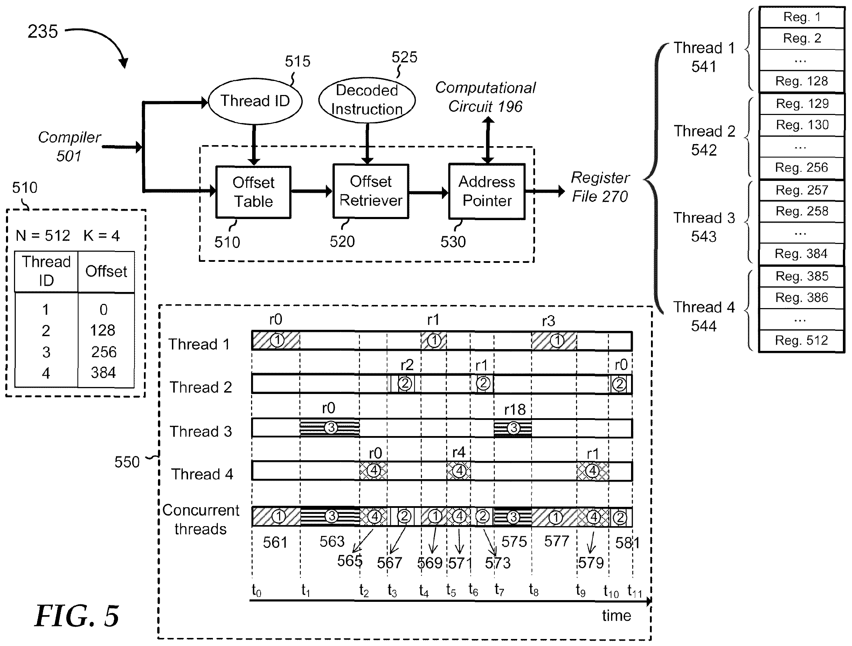

FIG. 5is a diagram illustrating the register renaming circuit 235 shown in FIG. 2 according to an embodiment. The register renaming circuit 235 includes an offset table 510, an offset retriever 520, and an address pointer 530. The register renaming circuit 235 may include more or less than the above components. The register renaming circuit 235 operates with the assistance of a compiler 501 that compiles the instructions and generates the multi-threaded decoded instructions.

The compiler is designed for multi-threaded programming. It is configured to allow the user to specify the number of threads. During execution, it generates a thread identifier 515 of the actively running thread and a decoded instruction 525 of the active thread. The register renaming circuit 235 utilizes this information to partition the register file 270 and allocates the partitioned register file to the threads according to the thread identifier. This is achieved by using an offset assigned to each thread. Each thread is assigned a partitioned register file using the offset to point to the registers. The offsets are determined prior to the execution of the multi-threaded program and will remain throughout the execution of the entire program.

For example, suppose the register file 270 has N = 512 registers, named r1 through r512. Suppose the number of threads is K = 4. To maximize the size of the partition, the entire register file 270 is partitioned into four partitions assigned to four threads 1, 2, 3, and 4. Each partition therefore has a total of N/K registers, or 512/4 = 128 registers. Thread 1 541 is assigned to the partition including register 1 through register 128. Thread 2 542 is assigned to the partition including register 129 through register 256. Thread 3 543 is assigned to the partition including register 257 through register 384. Thread 4 544 is assigned to the partition including register 385 through register 512. Since each thread has its own register file, though smaller, there will not be any register conflict due to multiple threads. This partitioning provides the basis for the offsets stored in the offset table, with the offset being equal to the first register in the partition.

The offsets are stored in a table 510. This table may be implemented as a fast SRAM such as cache. It will be used as a look-up table to generate the offset indexed by the thread identifier. For example, for N=512 and K=4, the table stores the offset values 0, 128, 256, and 384 for thread ID 1, 2, 3, and 4, respectively. The offset is the starting register number or address of the partition. By allocating separate partitions for the threads, there will be no register conflict. Architectural registers will be converted to physical registers by adding the register address to the offset.

A decoded instruction has a register usage that references a register. Since the register needs to be renamed, the offset is retrieved from the table 510. For N threads, N offsets are retrieved. Suppose there are two threads executing on a PE and there are two decoded instructions from the two threads. The decoded instructions operate on the operands stored in the register file. Each decoded instruction has a register usage. The table 510 is configured to store the first offset and the second offset based on the first and second register usages, respectively.

The offset retriever 520 is configured to obtain the first offset and the second offset according to a first register usage and a second register usage, respectively, based on a thread identifier that identifies at least one of a first thread or a second thread, respectively. After the offset is obtained, it is used to rename the register, or calculate the address of the register.

The address pointer 530 may be configured to generate at least one of a first register address or a second register address based on at least one of the first offset or the second offset, respectively. The first and second register addresses correspond to first and second operands, respectively, stored in the register file 270. The register address or the renamed register is determined by adding the offset to the register name in the decoded instruction as follows:

$$\text{Renamed register} = \text{register in decoded instruction} + \text{offset of thread} \qquad (1)$$

For example, suppose the table 510 is constructed for a 4-thread program. There are two instructions executing on two threads. Instruction 1 is *load r5, a* in thread 1 and instruction 2 is *load r73, c* in thread 2. When instruction 1 is decoded, its thread identifier (ID = 1) is determined. The offset retriever 520 retrieves the offset from the offset table 810. This offset is 0. Accordingly, the address pointer adds the offset to the register address or register number. The renamed register is r(5 + 0) = r5. When instruction 2 is decoded, its thread identifier (ID = 2) is determined. The offset retriever 520 retrieves the offset from the offset table 510. This offset is 128. Accordingly, the address pointer adds the offset to the register address or register number in the decoded instruction. The renamed register is r(73 + 128) = r191.

Block 550 shows an example of a 4-thread program in execution. Thread 1 has offset = 0. It executes instructions at three execution windows 561, 569, and 577, which reference architectural registers 0, 1, 3, respectively. Thread 2 has offset = 128. It executes instructions at three execution windows 567, 573, and 581, which reference architectural registers 2, 1, 0, respectively. Thread 3 has offset = 256. It executes instructions at two execution windows 563 and 575, which reference architectural registers 0 and 18, respectively. Thread 4 has offset = 384. It executes instructions at three execution windows 565, 571, and 579, which reference architectural registers 0, 4. and 1, respectively. The registers are then renamed, or the register addresses for the physical registers in the register file 270 are generated by the address pointer 530 as follows:

Thread 1: r0 → r0, r1→ r1, r3 → r3
Thread 2: r2 → r130 (=2+128), r1→ r129 (=1+128), r0 → r128 (=0+128)
Thread 3: r0 → r256 (=0+256), r18→ r274 (=18+256)
Thread 4: r0 → r384 (=0+384), r4→ r388 (=4+384), r1 → r385 (=1+384)

In the above example, the four threads may reference the same architectural registers, but the renamed registers point to different physical registers. Therefore, register conflict can never occur.

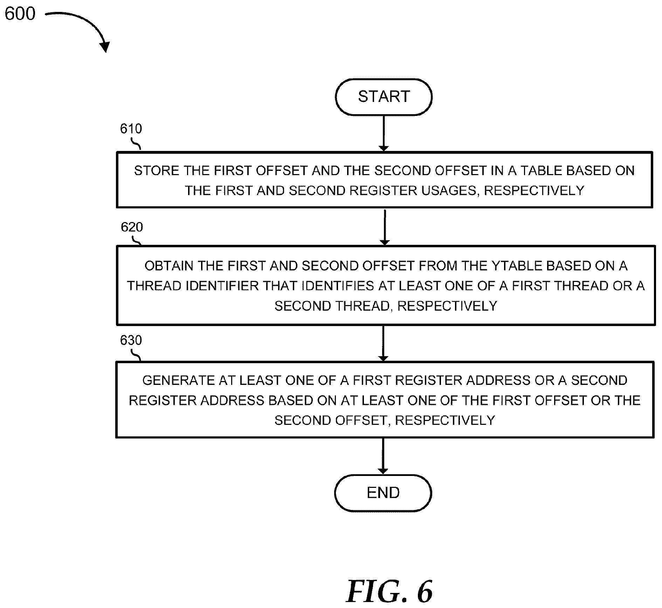

FIG. 6 is a flowchart illustrating a process 600 of register renaming using offset according to an embodiment.

Upon START, the process 600 stores the first offset and the second offset in a table based on the first and second register usages, respectively (Block 610). The first offset or the second offset is determined based on a size of the register file and a number of threads executing in a processing element (PE). Next, the process 600 obtains a first offset and a second offset according to a first register usage and a second register usage, respectively, based on a thread identifier that identifies at least one of a first thread or a second thread, respectively (Block 620). The first and second threads execute on the PE.

Then, the process 600 generates at least one of a first register address or a second register address based on at least one of the first offset or the second offset, respectively (Block 630). The first register address and the second register address are the renamed registers and correspond to the physical registers in the register file. The first and second register addresses correspond to first and second operands, respectively, stored in the register file. The first and second threads include first and second decoded instructions, respectively, that operate on the first and second operands, respectively. The process 600 is then terminated.

All or part of an embodiment may be implemented by various means depending on applications according to particular features, functions. These means may include hardware, software, or firmware, or any combination thereof. A hardware, software, or firmware element may have several modules coupled to one another. A hardware module is coupled to another module by mechanical, electrical, optical, electromagnetic or any physical connections. A software module is coupled to another module by a function, procedure, method, subprogram, or subroutine call, a jump, a link, a parameter, variable, and argument passing, a function return, etc. A software module is coupled to another module to receive variables, parameters, arguments, pointers, etc. and/or to generate or pass results, updated variables, pointers, etc. A firmware module is coupled to another module by any combination of hardware and software coupling methods above. A hardware, software, or firmware module may be coupled to any one of another hardware, software, or firmware module. A module may also be a software driver or interface to interact with the operating system running on the platform. A module may also be a hardware driver to configure, set up, initialize, send and receive data to and from a hardware device. An apparatus may include any combination of hardware, software, and firmware modules.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications within the scope of the following claims.

**Claims**

1.  An apparatus comprising:

    an offset retriever (520) configured to obtain a first offset and a second offset according to a first register usage and a second register usage, respectively, based on a thread identifier that identifies at least one of a first thread or a second thread, respectively, the first and second threads executing on a processing element, PE, (170);
    an address pointer (530) configured to generate at least one of a first register address or a second register address based on at least one of the first offset or the second offset, respectively,
    wherein the first and second register addresses correspond to first and second operands, respectively, stored in a register file (270), and
    wherein the first and second threads include first and second decoded instructions, respectively, that operate on the first and second operands, respectively.

2.  The apparatus of claim 1, wherein at least one of the first offset or the second offset is determined based on a size of the register file (270) and a number of threads executing in the PE (170).

3.  The apparatus of claim 1 or 2, further comprising:
    a table (510) configured to store the first offset and the second offset based on the first and second register usages, respectively.

4.  The apparatus of claim 3, wherein at least one of the first register usage or the second register usage is provided by a compiler (501).

5.  The apparatus of any one of claims 1 to 4, wherein the first and second threads are executed concurrently in the PE (170).

6.  The apparatus of any one of claims 1 to 5, wherein the first and second register usages have a register conflict.

7.  The apparatus of claim 6, wherein at least one of the first register usage or the second register usage maps an architectural register to a physical register in the register file (270).

8.  The apparatus of claim 7, wherein the at least one of the first register usage or the second register usage maps an architectural register to a physical register based on a resolution of the register conflict.

9. The apparatus of any one of claims 1 to 8, wherein the register file (270) is statically partitioned based on a number of concurrent threads executing on the PE (170).

10. The apparatus of any one of claims 1 to 9, wherein the PE (170) is part of a PE cluster in a high-bandwidth memory, HBM, processing system.

11. A method comprising:

obtaining a first offset and a second offset according to a first register usage and a second register usage, respectively, based on a thread identifier that identifies at least one of a first thread or a second thread, respectively, the first and second threads executing on a processing element, PE, (170);
generating at least one of a first register address or a second register address based on at least one of the first offset or the second offset, respectively,
wherein the first and second register addresses correspond to first and second operands, respectively, stored in a register file (270), and
wherein the first and second threads include first and second decoded instructions, respectively, that operate on the first and second operands, respectively.

12. The method of claim 11, wherein at least one of the first offset or the second offset is determined based on a size of the register file (270) and a number of threads executing in the PE (170).

13. The method of claim 11 or 12, further comprising:
storing the first offset and the second offset in a table (510) based on the first and second register usages, respectively.

14. The method of any one of claims 11 to 13, wherein at least one of the first register usage or the second register usage is provided by a compiler (501).

15. The method of any one of claims 11 to 14, wherein the first and second threads are executed concurrently in the PE (170).

FIG. 1

EP 4 715 582 A1

EP 4 715 582 A1

180

220 Instruction Pipeline

Register Renaming

222          226          230 ~       235                  234

Fetch   →   Decode   →   Register        →   Issuance
                          Renaming
                          Circuit

L1 Cache 172
Bus 190

238                    242

210 ~                           270 ~
Instruction                     Register   →   Execute   →   Memory
Buffer                          File

Instr Mem 192

196 ~                   246
            Comput.                         Writeback
            Circuit

260                    250

            Register   ←                    Retirement
            Buffer

*FIG. 2*

FIG. 3

400

EP 4 715 582 A1

(21) load %r1, a[i]    (31) load %r2, b[i]    (41) mul %3, %1, %2

412    414    416

410 Thread 1

i = 263

r1 ← a[263]    r2 ← b[263]    r3 ← a[471]*b[471]    This is incorrect. Should be r3 ← a[263]*b[263]

$t_0$    $t_1$    $t_2$    $t_3$    $t_4$    $t_5$    $t_6$    time

422    424    426

420 Thread 2

i = 471

(22) load %r1, a[i]    (32) load %r2, b[i]    (42) mul %3, %1, %2

r1 ← a[471]    r2 ← b[471]    r3 ← a[471]*b[471]

Result in r1 in thread 1 is overwritten. If execution window 414 uses r1, it will use incorrect data

Result in r2 in thread 1 is overwritten. If execution window 416 uses r2, it will use incorrect data

This is correct, but result in thread 1 is overwritten

*FIG. 4*

**FIG. 5**

EP 4 715 582 A1

FIG. 6

# EUROPEAN SEARCH REPORT

**Application Number**

EP 25 20 0993

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/296428 A1 (RAWSON III FREEMAN LEIGH [US] ET AL) 1 December 2011 (2011-12-01) * the whole document * | 1-15 | INV. G06F9/38 G06F9/30 |
| X | US 2023/315536 A1 (WYSE MARK [US] ET AL) 5 October 2023 (2023-10-05) * the whole document * | 1-15 | |
| X | US 2015/074353 A1 (GE YIQUN [CA] ET AL) 12 March 2015 (2015-03-12) * the whole document * | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 5 February 2026 | Moraiti, Marina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 0993

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2026

| Patent document cited in search report | Publication date | Patent family member(s) | | Publication date |
|---|---|---|---|---|
| US 2011296428 A1 | 01-12-2011 | US | 2011296428 A1 | 01-12-2011 |
| | | WO | 2011147727 A1 | 01-12-2011 |
| US 2023315536 A1 | 05-10-2023 | NONE | | |
| US 2015074353 A1 | 12-03-2015 | CN | 105408860 A | 16-03-2016 |
| | | EP | 3028143 A1 | 08-06-2016 |
| | | US | 2015074353 A1 | 12-03-2015 |
| | | WO | 2015032355 A1 | 12-03-2015 |

EPO FORM P0459

For more details about this annex : see Official Journal of the European Patent Office, No. 12/82